# EUROPEAN PATENT APPLICATION

(11) **EP 3 961 582 A2**
(43) Date of publication of application: **02.03.2022**
(21) Application number: 21215951.1
(22) Date of filing: 20.12.2021
(51) Int. Cl.: G06V 20/58, G06V 20/56

(54) **METHOD AND APPARATUS FOR CONTROLLING VEHICLE AND ELECTRONIC DEVICE**

(30) Priority: 25.12.2020 CN 202011573355
(71) Applicant: BEIJING BAIDU NETCOM SCIENCE TECHNOLOGY CO., LTD., No.10 Shangdi 10th Street Haidian District Beijing 100085 (CN)
(72) Inventor: Chen, Yan, Beijing 100085 (CN); Jiang, Kangli, Beijing 100085 (CN)
(74) Representative: Maiwald Patent- und Rechtsanwaltsgesellschaft mbH

(57) **Abstract**

A method and an apparatus for controlling a vehicle, an electronic device and a storage medium are disclosed. The method includes: obtaining a plurality of images when the vehicle is driving, and determining lane line information included in the plurality of images by recognizing lane lines in the plurality of images; in response to a type of lane line in an image being a specified type, determining a region to be detected of the image based on a position of the specified type of lane line; determining traffic light information included in the image by detecting traffic lights in the region to be detected; and determining a current driving mode of the vehicle based on the traffic light information included in the image and a current driving state of the vehicle and driving the vehicle in the current driving mode.

## Description

### TECHNICAL FIELD

The present disclosure relates to a field of image processing technology, more specifically to a technical field of intelligent transportation and deep learning, and more specifically to a method and an apparatus for controlling vehicle driving, an electronic device, a storage medium, and a computer program product.

### BACKGROUND

At present, intelligent transportation is an important part of new infrastructure. Traffic light recognition is of great significance to the intelligent transportation and safe travel. Therefore, it is particularly important to recognize the traffic lights in realizing the intelligent transportation technology.

### SUMMARY

According to a first aspect of the present disclosure, a method for controlling a vehicle is provided. The method includes: obtaining a plurality of images when the vehicle is driving, and determining lane line information included in the plurality of images by recognizing lane lines in the plurality of images; in response to a type of lane line in an image being a specified type, determining a region to be detected of the image based on a position of the specified type of lane line; determining traffic light information included in the image by detecting traffic lights in the region to be detected; and determining a current driving mode of the vehicle based on the traffic light information included in the image and a current driving state of the vehicle and driving the vehicle in the current driving mode.

According to a second aspect of the present disclosure, an apparatus for controlling a vehicle includes a first determining module, configured to obtain a plurality of images when the vehicle is driving, and determine lane line information included in the plurality of images by recognizing lane lines in the plurality of images; a second determining module, configured to in response to a type of lane line in an image being a specified type, determine a region to be detected of the image based on a position of the specified type of lane line; a third determining module, configured to determine traffic light information included in the image by detecting traffic lights in the region to be detected; and a fourth determining module, configured to determine a current driving mode of the vehicle based on the traffic light information included in the image and a current driving state of the vehicle and drive the vehicle in the current driving mode.

According to a third aspect of the present disclosure, an electronic device is provided. The electronic device includes at least one processor and a memory communicatively coupled to the at least one processor. The memory is configured to store instructions executable by the at least one processor. When the instructions are executed by the at least one processor, at least one processor is configured to implement the method according to the first aspect of the disclosure.

According to a fourth aspect of the present disclosure, there is provided a non-transitory computer-readable storage medium having computer instructions stored thereon. The computer instructions are configured to cause a computer execute the method for controlling a vehicle in the first aspect of the present disclosure.

The traffic light recognition can be realized without depending on traffic light signal transmission devices, which has low costs and strong promotion, may reduce the amount of image data to be processed so that the traffic light recognition speed is increased and the driving experience is improved.

It is understood that the content described in the summary is not intended to identify the key or important features of the embodiments of the present disclosure, nor is it intended to limit the scope of the present disclosure. Other features of the present disclosure will be easily understood through the following description.

### BRIEF DESCRIPTION OF THE DRAWINGS

The drawings are used to better understand the solution, and are not restrictive of the disclosure.
FIG. 1 is a flow chart of a method for controlling vehicle driving according to an embodiment of the present disclosure.
FIG. 2 is a schematic diagram of a process for determining a region to be detected according to an embodiment of the present disclosure.
FIG. 3 is a schematic diagram of a process for determining indicator light information according to an embodiment of the present disclosure.
FIG. 4 is a schematic diagram of a process for verifying initial indicator lights to determine indicator light information according to an embodiment of the present disclosure.
FIG. 5 is a schematic diagram of another process for determining indicator light information according to an embodiment of the present disclosure.
FIG. 6 is a schematic diagram of traffic light recognition principle according to an embodiment of the present disclosure.
FIG. 7 is a structural schematic diagram of an apparatus for controlling vehicle driving according to an embodiment of the present disclosure.
FIG. 8 is a block diagram of an electronic device for implementing the method for controlling vehicle driving according to an embodiment of the present disclosure.

### DETAILED DESCRIPTION

Hereinafter, exemplary embodiments of the present disclosure will be described in details with reference to the drawings, which include various details of the embodiments of the present disclosure to facilitate understanding, and should be considered as merely exemplary. Therefore, those of ordinary skill in the art should realize that various changes and modifications may be made to the embodiments described herein without departing from the scope and spirit of the present disclosure. Likewise, for clarity and conciseness, descriptions of well-known functions and structures are omitted in the following description.

Intelligent transportation, also called as an intelligent transportation system, is a comprehensive transportation system that is formed by effectively integrating advanced science and technologies (such as, information technology, computer technology, data communication technology, sensor technology, electronic control technology, an automatic control theory, artificial intelligence, etc.) into the transportation, service controlling and vehicle manufacturing and strengthening the connections between vehicles, roads, and users, which guarantees safety, increases efficiency, improves the environment, and saves energy.

Deep learning is a new research direction in the field of machine learning, which is introduced into the machine learning to be closer to the original goal, i.e., artificial intelligence. Deep learning is to learn internal laws and representation levels of sample data. The information obtained in the learning process is of great help to interpretation of data such as text, images, and sounds. The ultimate goal of deep learning is to allow machines to have an analyzing and learning ability like humans, and be able to recognize data such as text, images and sounds.

Currently, recognizing traffic lights has a great importance to intelligent transportation and safe travel since the intelligent transportation is an important part of new infrastructure and capital constructions. Therefore, recognizing the traffic lights to realize the intelligent transportation technology is particularly important.

In the related art, the traffic light recognition mainly relies on transmitting by a traffic light signal transmission device, information to vehicles within its corresponding geographical fence through wireless signals. This technology has high device costs, difficult to engage when it is necessary to modify the existing traffic light device, and insufficient promotion. In the related art, a spatial location of traffic lights are accurately located with high-precision maps and camera parameters and the traffic light signals are then identified. This technology has high costs and insufficient promotion since the high-precision maps are required in which high-precision map data is updated slowly.

To this end, a method and an apparatus for controlling vehicle driving, and an electronic device are provided in the embodiments of the present disclosure. In the embodiments of the disclosure, traffic light detection is performed according to lane line information to determine indicator light information, and a current driving mode of the vehicle is then determined based on the indicator light information. The traffic light recognition may be realized without relying on traffic light signal transmission devices and high-precision maps. It not only has low costs and strong promotion, but also may reduce an amount of image data that needs to be processed and thus increases the speed of traffic light recognition, which is conducive to safe driving.

The following describes a method and an apparatus for controlling vehicle driving, and an electronic device in the embodiments of the present disclosure with reference to the accompanying drawings.

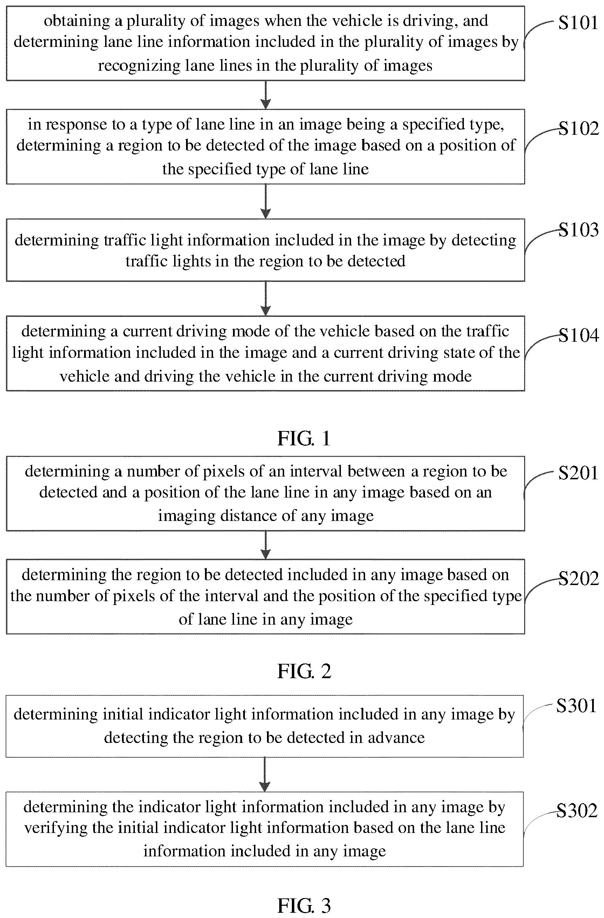

FIG. 1 is a schematic flowchart of a method for controlling vehicle driving according to an embodiment of the present disclosure.

It should be noted that, an execution subject of the method for controlling vehicle driving in the embodiments of the present disclosure may be an electronic device (which may be a vehicle-mounted device/an on-board device). Specifically, the electronic device may include but not limited to a server or a terminal, in which the terminal may include but not limited to a personal computer, a smart phone, an IPAD, etc.

In the embodiment of the present disclosure, it is taken as an example that, the method for controlling vehicle is configured in an apparatus for controlling vehicle. The apparatus may be applied to an electronic device so that the electronic device can execute the method for controlling vehicle.

As shown in FIG. 1, the method for controlling vehicle driving includes the following steps.

At S101, lane line recognition is performed on images obtained in the vehicle driving to determine lane line information included in the images.

In the embodiments of the present disclosure, an image may be obtained in real time during the driving process of the vehicle through an on-board camera device (a smart rearview mirror, a mobile phone, a front-mounted camera, etc.). The image may reflect road surface information (including lane lines on the road surface) around the vehicle during the driving process and vehicle information (including driving states of front vehicles and driving states of behind vehicles). It should be noted that, a number of images obtained may be more than one, and each of the images may or may not include lane lines, so it is necessary to perform lane line recognition.

The lane line may be a road traffic indication line for indicating the vehicles to drive or travel, which may include a zebra crossing, a stop line, and the like.

Specifically, during the driving of the vehicle, images may be acquired in real time through the on-board camera to obtain at least one image, and each image is processed. For example, after the gray scales of the images are processed, it is determined whether lane lines are included in the images by performing lane line recognition. That is, when the image contains the lane lines, the lane line information is recognized, in which the lane line information may include a types of lane line, a color of the lane line, a shape of the lane line, and a number of lane lines, etc.

It should be noted that, the method for determining the lane line information in the embodiment of the present disclosure may also be other methods in the related art, as long as the step at S101 can be implemented, which is not limited in the embodiment of the present disclosure.

At S102, in response to a type of lane line in any image being a specified type, a region to be detected included in any image is determined based on a position of the specified type of lane line in any image.

In the embodiments of the present disclosure, "any" means "one or a certain one" instead of "each".

In the embodiment of the present disclosure, the specified type may refer to any lane line type for indicating that the current position of the vehicle is at road junctions (for example, intersections), such as a zebra crossing or a stop line.

In the embodiment of the present disclosure, the region to be detected may refer to a region where traffic light detection is required for the vehicle to recognize indicator lights (traffic lights).

It should be noted that, under normal circumstances, traffic light signs are provided at the road junctions. Therefore, the embodiment of the present disclosure may determine the region to be detected for traffic light detection when the vehicle is driving to the road junctions based on the lane line information.

Specifically, after the lane line information is determined based on the image, a type of each lane line can be determined. If the type is the specified type, then a position of the specified type of lane line can be determined in the image, and it is then determined based on the position that the region to be detected where the specified type of lane line included in the image is located, for subsequent traffic light detection.

At S103, indicator light information included in any image is determined by detecting traffic lights in the region to be detected.

The indicator light information can be configured to indicate a driving direction of the vehicle (such as, going straight, turning left, turning right, U-turn) and a driving state (such as, whether to continue driving), and may include an indicator light color (red, yellow or green), a number of indicator lights, a shape (type) of the indicator light, etc.

Specifically, after the region to be detected included in any image (a certain image) is determined, the traffic light information is detected in the region to be detected to determine the indicator light information included in the image.

The above steps at S101 to S103 are illustrated by taking examples. For example, if an image 1, an image 2, an image 3, and an image 4 are acquired while the vehicle is driving and the image 1, the image 2 and the image 3 all contain lane lines, it is then determined respectively that lane line information included in the image 1, lane line information included in the image 2 and lane line information included in the image 3, and when the three lane lines are all zebra crossings, a region to be detected in the image 1 is determined based on a position of the zebra crossing in the image 1, a region to be detected in the image 2 is determined based on a position of the zebra crossing in the image 2, and a region to be detected in the image 3 is determined based on a position of the zebra crossing in the image 3. Next, the traffic light detection is performed on the three regions to be detected for obtaining indicator light information included in the image 1, indicator light information included in the image 2 and indicator light information included in the image 3.

At S104, a current driving mode of the vehicle is determined based on the indicator light information included in any image and a current driving state of the vehicle.

In the embodiment of the present disclosure, the driving state (such as the driving speed, the driving direction, etc.) of the vehicle may be detected in real time during the driving process of the vehicle.

Specifically, after the indicator light information included in any image is determined, the current driving state of the vehicle may be obtained, and the current driving mode of the vehicle can be then determined based on the indicator light information and the current driving state of the vehicle.

For example, if the indicator light included in the image 1 is a left turn indicator light (also called a left side indicator light) and its color is green, the indicator light included in the image 2 is a right turn indicator light and its color is green, the indicator light included in the image 3 is a straight indicator light (also known as a front indicator light relative to the vehicle) and its color is red, and the vehicle is currently driving at a high speed, the vehicle can be controlled to slow down and a red light warning is carried out at the same time.

It should be noted that, countdown time corresponding to the indicator light may also be obtained in the embodiment of the present disclosure, and the current driving mode of the vehicle may be determined based on the indicator light information, the current driving state of the vehicle, and the countdown time of the indicator light.

It should also be noted that, a green wave speed can also be identified in the acquired image, so that the green wave speed (if any) can be considered when the current driving mode of the vehicle is determined to ensure that the vehicle continues to drive smoothly later. The green wave speed for a road is maintained to maximize a capacity of vehicles passing through the road and reduce the time for vehicles waiting for a red light at a crossing.

That is to say, the traffic lights are located and recognized with visual methods in the embodiment of the present disclosure. There is no need to modify the existing traffic light devices, and high-precision maps are not needed. It is only necessary to install software for recognizing the traffic lights on an on-board device of the vehicle to implement the above steps. The above steps can realize the traffic light recognition only based on the lane lines on the ground. Since the lane lines are on the ground, the lane lines are identified to determine whether there are traffic lights and traffic light information in front of the vehicle, which may not only reduce the amount of image data that needs to be processed (since only a part of images are recognized), but also may increase the recognition speed.

With the method for controlling vehicle driving according to the embodiment of the present disclosure, the indicator light information is determined by performing traffic light detection based on the lane line information, and the current driving mode of the vehicle is then determined based on the indicator light information. Therefore, traffic light recognition can be realized without depending on traffic light signal transmission devices, which has low costs and strong promotion, may reduce the amount of image data to be processed so that the traffic light recognition speed is increased and the driving experience is improved.

When the region to be detected is determined at S102, in order to ensure the validity of the region to be detected, the region to be detected can be determined based on a distance between the vehicle and the lane line, or the region to be detected can be determined based on an imaging distance of the image.

In an embodiment of the present disclosure, as shown in FIG. 2, determining the region to be detected included in any image based on the position of the specified type of lane line in any image at S102 may include the following steps at S201 and S202.

At S201, a number of pixels of an interval between a region to be detected and a position of the lane line in any image is determined based on an imaging distance of any image.

Specifically, after lane line recognition is performed on at least one image and the lane line information included in any image is determined, the imaging distance of a camera that took the image can be determined, in which the lane line information may include the position of the lane line in the image. That is, the imaging distance of any image may be determined and the number of pixels of the interval between the region to be detected (unknown) and the position of the lane line in any image may be thus determined based on the imaging distance.

At S202, the region to be detected included in any image is determined based on the number of pixels of the interval and the position of the specified type of lane line in any image.

Specifically, after the number of pixels of the interval is determined and in a case where the lane line type included in any image is the specified type, the region to be detected included in the image can be determined based on a number of pixels of the interval (known) and a position of the specified type of lane line in the image (known) since the position of the specified type of lane line in any image has been determined.

It should be noted that, a height of traffic lights for motor vehicles is generally 1.5 meters. In the embodiment of the present disclosure, each of the traffic lights has a size of about 5^{∗}15 pixels at a distance of 50 meters, a distance between a traffic light in any size and the vehicle may be determined based on the imaging distance inversely proportional to the distance, and the region to be detected is thus obtained where the traffic lights are located.

For example, when the imaging distance for the image 2 is 50 meters, it can be determined that the number of pixels of the interval between the region to be detected (to be determined, unknown) and the position of the lane line in the image 2 is about 5^{∗}15 pixels, and when the specified type of lane line is included in the image 2, the imaging distance of the specified type of lane line is determined (for example, 48 meters) based on the 5^{∗}15 pixels and the position of the specified type of lane line in the image 2, so that it can be concluded based on the imaging distance that the region to be detected is located at a position approximately 48 meters away from the vehicle.

As a result, the region to be detected is determined based on the imaging distance of the image, which accordingly improves the accuracy and reliability of the region to be detected, and further improves the accuracy of traffic light recognition.

When the indicator light information included in any image is determined by detecting traffic lights in the region to be detected at S103, in order to increase the traffic light detection rate and reduce the false detection rate, multiple traffic light detections may be performed or the initially determined indicator light information may be verified to obtain more accurate indicator light information. The indicator light information may be verified based on the lane line information and/or position information of the vehicle, which will be described in two embodiments below.

In an embodiment of the present disclosure, as shown in FIG. 3, the above step at S103 may include the following steps at S301 and S302.

At S301, initial indicator light information included in any image is determined by detecting the region to be detected in advance.

It should be noted that, since the size of the traffic lights is small with a clustering effect, the simplified traffic light detection model can be used to initially detect and locate the traffic lights, so as to determine the initial indicator light information such as a number of indicator lights, an indicator light type, etc.

It should be noted that, a simplified traffic light detection model may be trained in advance based on deep learning, and the model may take images as an input and traffic light information as an output.

Specifically, after the region to be detected is determined in any image (a certain image), the simplified traffic light detection model can be utilized to perform traffic light detection on the region to be detected and determine the initial indicator light information included in any image. That is, the region to be detected is input into the simplified traffic light model, and the initial indicator light information is then outputted by the simplified traffic light model.

At S302, the indicator light information included in any image is determined by verifying the initial indicator light information based on the lane line information included in any image.

Specifically, after the initial indicator light information included in any image is determined, the initial indicator light information is verified based on the lane line information included in any image. Specifically, the lane line information in any image may be compared with the initial indicator light information, it can be determined whether the lane line information in any image is matched to the initial indicator light information, and further verification can be performed in response to the lane line information not matching to the initial indicator light information, so as to ensure the accuracy of the indicator light information.

As a result, verifying the initial indicator light information based on the lane line information can increase the traffic light detection rate and reduce the false detection rate, which accordingly improves the accuracy and reliability of the indicator light information.

It should be noted that, when the initial indicator light information is verified at S302, verification may be performed based on the number of indicator lights and the indicator light type in order to perform effective verification.

In an embodiment of the present disclosure, the indicator light information includes a number of indicator lights and an indicator light type, where the indicator light type may include a pedestrian light, a non-motorized vehicle light, a side indicator light (such as a left side traffic light and a right side traffic light), a back indicator light and a front indicator light, etc.

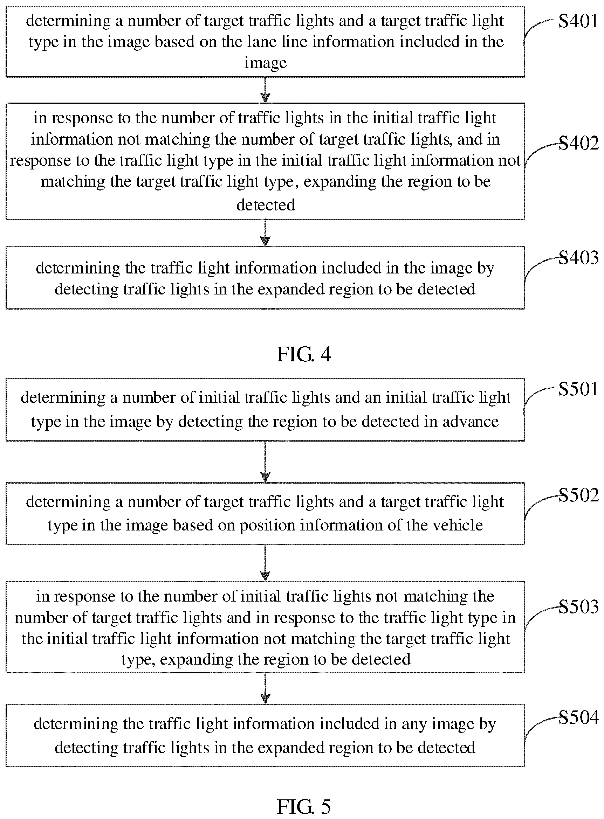

As shown in FIG. 4, the above step at S302 may include the following steps at S401 to S403.

At S401, a number of target indicator lights and a target indicator light type included in any image are determined based on the lane line information included in any image.

In the embodiment of the present disclosure, the number of target indicator lights may refer to a number of indicator lights corresponding to the lane line information included in any image, and the target indicator light type may refer to an indicator light type corresponding to the lane line information included in any image. The lane line information may include a number of lane lines. It may be understood that, the more lane lines, the wider the intersection and the more traffic light types.

Specifically, after the initial indicator light information included in any image is determined, the number of indicator lights and the indicator light type in the initial indicator light information can be determined, such as, there may be 3 indicator lights that are respectively a left side indicator light, a front indicator light and a right side indicator light. At the same time, a number of target indicator lights and a target indicator light type included in any image may be determined based on the lane line information included in any image, for example, when the lane lines include a crosswalk (zebra crossing) or a stop line, and 2 white solid lines parallel to the vehicle, it can be determined that the number of target indicator lights is 3 and the target indicator light types are a left side indicator light, a front indicator light, and a right side indicator light.

At S402, in response to the number of indicator lights in the initial indicator light information not matching the number of target indicator lights, and the indicator light type in the initial indicator light information not matching the target indicator light type, an expanded region to be detected is generated by expanding the region to be detected.

Specifically, after the number of indicator lights and the indicator light type in the indicator light information, and the number of target indicator lights and the target indicator light type included in any image are determined, it may be determined whether the number of indicator lights matches the number of target indicator lights by comparing the two numbers, and whether the indicator light type matches the target indicator light type by comparing the two types. When the number of indicator lights does not match the number of target indicator lights and/or the indicator light type does not match the target indicator light type, the region to be detected is expanded outward, that is, increasing a range of the region to be detected so as to generate the expanded region to be detected. The expansion degree may be actually determined based on specific conditions.

For example, when the number of indicators is 3 and the number of target indicators is 2, the region to be detected may be expanded outward since the two numbers do not match to each other; when the indicator light type is a left side indicator light while the target indicator light type is a front indicator light, the region to be detected may be expanded outward since the two types do not match.

At S403, the indicator light information included in any image is determined by detecting indicator lights in the expanded region to be detected.

It should be noted that, a traffic light detection model with high precision may be trained in advance based on deep learning, and the model may take images as an input and high-precision traffic light information as an output.

Specifically, after the expanded region to be detected is generated, the traffic light detection model with high precision can be used to perform indicator light detection on the expanded region to be detected, so as to determine the indicator light information included in any image.

Specifically, the expanded region to be detected may be input into a traffic light detection model with high precision, and the indicator light information included in any image is then outputted by the traffic light detection model with high precision.

Therefore, the simplified model is used to initially detect and locate the traffic lights, and the region where the traffic lights are detected is expanded based on the lane line information. Then, the high-precision model is used to detect the traffic lights for a second time, which not only further improves the traffic light detection rate and reduces the false detection rate, but also has low cost and is easy to promote

It should be noted that, the embodiment of the present disclosure may also perform verification or calibration on the indicator light information in other methods in the related art, and the above-mentioned embodiment of the present disclosure is only an exemplary description.

As described above, the region to be detected is verified based on the lane line information to obtain the region to be detected with high precision. It should be noted that, in addition, the region to be detected may also be verified based on the position of the vehicle to obtain the region to be detected with high precision. An embodiment below is described for illustration.

In another embodiment of the present disclosure, as shown in FIG. 5, the above step at S103 may include the following steps at S501 to S504.

At S501, a number of initial indicator lights and an initial indicator light type included in any image are determined by detecting the region to be detected in advance.

Specifically, after the region to be detected included in any image (a certain image) is determined, the region to be detected may be detected in advance to determine a number of indicator lights and an indicator light type in the initial indicator light information. For example, there may be 3 indicator lights, i.e., a left side indicator light, a front indicator light and a right side indicator light. At the same time, the current position of the vehicle may also be navigated or positioned to obtain position information of the vehicle. For example, the current position of the vehicle is a position 2 meters away from the zebra crossing.

At S502, a number of target indicator lights and a target indicator light type included in any image are determined based on position information of the vehicle.

Specifically, after the position information of the vehicle is determined, the number of target indicator lights and the target indicator light type are determined based on the position information of the vehicle. For example, when the current position of the vehicle is 2 meters away from the zebra crossing and located in a middle segment of the road, it may be determined that the number of indicator lights is 3, and the target indicator light type is a front indicator light.

At S503, in response to the number of initial indicator lights not matching the number of target indicator lights and in response to the initial indicator light type not matching the target indicator light type, an expanded region to be detected is generated by expanding the region to be detected.

Specifically, after the number of target indicator lights and the target indicator light type, and the number of initial indicator lights and the initial indicator light type are determined, it may be determined whether the number of initial indicator lights matches the number of target indicator lights by comparing the two numbers, and whether the initial indicator light type matches the target indicator light type by comparing the two types. When the number of initial indicator lights does not match the number of target indicator lights and/or the initial indicator light type does not match the target indicator light type, the region to be detected is expanded outward, that is, increasing a range of the region to be detected so as to generate the expanded region to be detected. The expansion degree may be actually determined based on specific conditions.

For example, when the number of initial indicator lights is 3 and the number of target indicators is 2, the region to be detected may be expanded outward since the two numbers do not match to each other; when the initial indicator light type is a left side indicator light while the target indicator light type is a front indicator light, the region to be detected may be expanded outward since the two types do not match.

At S504, the indicator light information included in any image is determined by detecting indicator lights in the expanded region to be detected.

The traffic light detection model with high precision may be used to determine the indicator light information included in any image by performing indicator light detection on the expanded region to be detected. For example, the indicator light information may include two indicator lights that are a sidewalk indicator light and a front indicator light, respectively.

As a result, the region where the traffic lights are detected is expanded based on the position of the vehicle, and the traffic lights are then detected for a second time, which further improves the traffic light detection rate and reduces the false detection rate.

It should be noted that, in the embodiment of the present disclosure, after the above step at S102 is executed, the region to be detected may be calibrated based on other vehicles around the current vehicle, such as a vehicle in front (referred to as a preceding vehicle) of the current vehicle.

In an embodiment of the present disclosure, after the above step at S102, it may further include: in response to an image including a preceding vehicle, determining a current driving state of the preceding vehicle based on other images adjacent to the image including the preceding vehicle, and in response to the preceding vehicle being in a stopped state, calibrating the region to be detected based on a position of the preceding vehicle.

The preceding vehicle may refer to a vehicle directly in front of the current vehicle, the number of which may be more than one.

Specifically, after the region to be detected included in any image is determined, it can be determined whether at least one preceding vehicle is included in any one of the images, and when at least one preceding vehicle is included, other images adjacent to the image are acquired. Based on the other images, the current driving state of at least one preceding vehicle is determined. When the current driving state of the preceding vehicle is in the stopped state, the current position of the preceding vehicle can be obtained and the region to be detected is calibrated based on the current position of the preceding vehicle.

Specifically, an upper position corresponding to the position of the preceding vehicle can be obtained and it can be determined whether the upper position matches the determined region to be detected. When the upper position does not match the region to be detected or the matching degree is not high, the region to be detected may be then calibrated based on the upper position of the preceding vehicle. Generally, the traffic light signs are located above the current lane line and located at the upper position above the preceding vehicle. Therefore, when the region to be detected is calibrated, the region to be detected can be calibrated to a region including the upper position of the preceding vehicle.

Therefore, when there is a preceding vehicle, the region to be detected is calibrated based on the position of the preceding vehicle, which not only ensures the validity of the calibration, but also further improves the accuracy of the region to be detected.

After relatively reliable and accurate indicator light information is determined based on the above embodiments, the above step at S104 is executed, that is, the current driving mode of the vehicle is determined based on the indicator light information included in any image and the current driving state of the vehicle.

In an embodiment of the present disclosure, the indicator light information includes an indicator light type and an indicator light color. Determining the current driving mode of the vehicle at S104 may include: determining a target indicator light and a target indicator light color corresponding to the vehicle based on a current driving direction of the vehicle, the indicator light type and the indicator light color; and determining the current driving mode of the vehicle based on the target indicator light color, an imaging distance of any image, and a current driving speed of the vehicle.

Specifically, after the indicator light information included in any image is determined, the current driving direction of the vehicle can be obtained, and the indicator light type and color in the indicator light information can also be obtained, and the target indicator light and its color corresponding to the vehicle can be determined from the indicator light types and indicator light colors based on the driving direction. Then, the current driving mode of the vehicle is determined based on the color of the target indicator light, the imaging distance of any one image, and the current driving speed of the vehicle. For example, the current driving mode may indicate whether the vehicle continues to drive until it passes traffic lights or the vehicle stops driving, how long the vehicle keeps parked, so that the vehicle is controlled to drive based on the current driving mode with a high safety factor and a good driving experience.

It should be noted that, a height of traffic lights for motor vehicles is generally 1.5 meters. In the embodiment of the present disclosure, each of the traffic lights has a size of about 5^{∗}15 pixels at a distance of 50 meters, a distance between a traffic light in any size and the vehicle may be determined based on the imaging distance inversely proportional to the distance.

For example, when the target indicator light is a front indicator light in red, the imaging distance of any image is 40 meters, and the current driving speed of the vehicle is relatively fast, a red light warning can be performed to remind the driver, and a current appropriate vehicle speed is calculated by a minimum green wave speed of the current traffic light, so that the current vehicle can continue to drive at the calculated appropriate speed to just meet the green light for passing the traffic light intersection; or when the preceding vehicle is in a notified state, it can be determined that the current vehicle needs to stop.

It should be noted that, when the current driving mode is determined, a red light warning prompt or a traffic light countdown prompt can be performed based on the driving mode. In addition, a green wave speed prompt can also be performed.

For example, when the driving speed of the current vehicle is 60km/h, and the green wave speed of the current road segment is determined to be 50km/h after the image is identified, a driving prompt can be provided in time to reduce the current vehicle speed to 50km/h or the current vehicle speed is automatically adjusted to meet 50km/h and cause the vehicle driving smoothly on the current road segment.

Therefore, the current driving mode of the vehicle is determined based on the color of the target indicator light, the imaging distance of the image, and the current driving speed of the vehicle, which not only improves the safety factor, but also improves the driving experience.

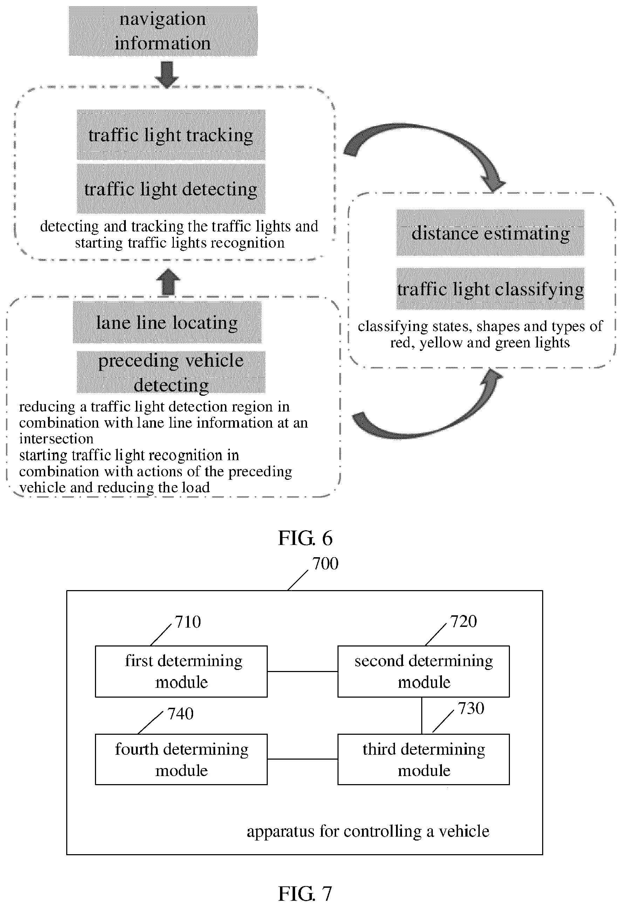

In general, only vehicle-mounted cameras are needed to obtain the lane lines in the embodiments of the disclosure, the region to be detected where the traffic lights are located is obtained based on the lane line position and/or the position of the preceding vehicle, instead of estimating the region to be detected with the high-precision map and camera parameters. Then, the type, shape and color of the traffic light are recognized, and red light warning and green wave speed warning are performed based on the traffic light information. The further description is made below in conjunction with FIG. 6.

As shown in FIG. 6, a detection region for traffic lights is first determined based on lane line location information at an intersection and detection information of a preceding vehicle. The detection region for traffic lights may be located or reduced based on the lane line information at the intersection (such as a zebra crossing or a stop line), traffic light signal recognition may be started in combination with actions (e.g., a stop action) of the preceding vehicle, thereby reducing the load. Then, it continues to track changes of the traffic light signals and further determine a distance between the traffic light detection region and the vehicle, for detecting traffic light information in the traffic light detection region such as a color, a shape, a type and determining a current driving mode of the vehicle based on the traffic light information. As a result, the safety factor is high when the vehicle is controlled in this driving mode.

It should be noted that, in the embodiment of the present disclosure, the driving mode of the vehicle may be also determined based on the indicator light information in other methods in the related art, and the above-mentioned embodiments of the present disclosure are only exemplary.

An embodiment of the present disclosure also provides an apparatus for controlling vehicle driving. FIG. 7 is a structural schematic diagram of an apparatus for controlling vehicle driving according to an embodiment of the present disclosure.

As shown in FIG. 7, the apparatus 700 for controlling vehicle driving includes: a first determining module 710, a second determining module 720, a third determining module 730, and a fourth determining module 740.

The first determining module 710 is configured to determine lane line information included in images by recognizing lane lines in the images obtained in the vehicle driving. The second determining module 720 is configured to determine a region to be detected included in any image based on a position of the specified type of lane line in any image in response to a type of lane line in any image being the specified type. The third determining module 730 is configured to determine indicator light information included in any image by detecting traffic lights in the region to be detected. The fourth determining module 740 is configured to determine a current driving mode of the vehicle based on the indicator light information included in any image and a current driving state of the vehicle.

In an embodiment of the present disclosure, the second determining module 720 may include a first determining unit and a second determining unit. The first determining unit is configured to determine a number of pixels of an interval between a region to be detected and a position of the lane line in any image based on an imaging distance of any image. The second determining unit is configured to determine the region to be detected included in any image based on the number of pixels of the interval and the position of the specified type of lane line in any image.

In an embodiment of the present disclosure, the third determining module 730 may include a third determining unit and a fourth determining unit. The third determining unit is configured to determine initial indicator light information included in any image by detecting the region to be detected in advance. The fourth determining unit is configured to determine the indicator light information included in any image by verifying the initial indicator light information based on the lane line information included in any image.

In an embodiment of the present disclosure, the indicator light information includes a number of indicator lights and an indicator light type. The fourth determining unit 740 may include: a first determining subunit, a first generating subunit and a second determining subunit. The first determining subunit is configured to determine a number of target indicator lights and a target indicator light type included in any image based on the lane line information included in any image. The first generating subunit is configured to in response to the number of indicator lights in the initial indicator light information not matching the number of target indicator lights and the indicator light type in the initial indicator light information not matching the target indicator light type, generate an expanded region to be detected by expanding the region to be detected. The second determining subunit is configured to determine the indicator light information included in any image by detecting indicator lights in the expanded region to be detected.

In an embodiment of the present disclosure, the third determining module 730 may include: a fifth determining unit, a sixth determining unit, a first generating unit, and a seventh determining unit. The fifth determining unit is configured to determine a number of initial indicator lights and an initial indicator light type included in any image by detecting the region to be detected in advance. The sixth determining unit is configured to determine a number of target indicator lights and a target indicator light type included in any image based on position information of the vehicle. The first generating unit is configured to in response to the number of initial indicator lights not matching the number of target indicator lights and in response to the initial indicator light type not matching the target indicator light type, generate an expanded region to be detected by expanding the region to be detected. The seventh determining unit is configured to determine the indicator light information included in any image by detecting indicator lights in the expanded region to be detected.

In an embodiment of the present disclosure, the apparatus 700 for controlling vehicle driving may further include: a fifth determining module and a first calibration module. The fifth determining module is configured to in response to an image including a preceding vehicle, determine a current driving state of the preceding vehicle based on other images adjacent to the image including the preceding vehicle. The first calibration module is configured to in response to the preceding vehicle being in a stopped state, calibrate the region to be detected based on a position of the preceding vehicle.

In an embodiment of the present disclosure, the indicator light information includes an indicator light type and an indicator light color. The fourth determining module 740 may include an eighth determining unit and a ninth determining unit. The eighth determining unit is configured to determine a target indicator light and a target indicator light color corresponding to the vehicle based on a current driving direction of the vehicle, the indicator light type and the indicator light color. The ninth determining unit is configured to determine the current driving mode of the vehicle based on the target indicator light color, an imaging distance of any image, and a current driving speed of the vehicle.

It should be noted that other specific implementations of the apparatus for controlling vehicle driving in the embodiment of the present disclosure may be referred to the above specific implementations of the method for controlling vehicle driving. To avoid redundancy, details are not described herein again.

With the apparatus for controlling vehicle driving according to the embodiment of the present disclosure, traffic light recognition can be realized without depending on traffic light signal transmission devices, which has low costs and strong promotion, may reduce the amount of image data to be processed so that the traffic light recognition speed is increased and the driving experience is improved.

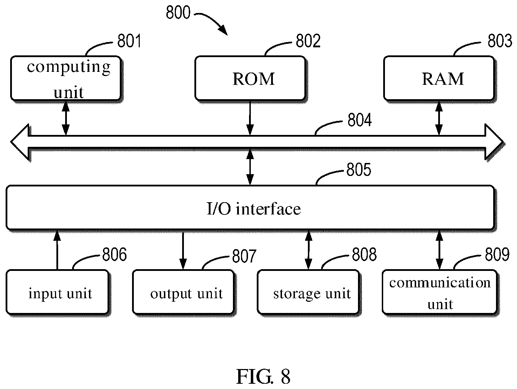

According to the embodiments of the present disclosure, the present disclosure also provides an electronic device, a readable storage medium, and a computer program product to implement a method for controlling vehicle driving. Description will be given below in conjunction with FIG. 8.

FIG. 8 is a block diagram of an electronic device for implementing the method for controlling vehicle driving according to an embodiment of the present disclosure. Electronic devices are intended to represent various forms of digital computers, such as laptop computers, desktop computers, workstations, personal digital assistants, servers, blade servers, mainframe computers, and other suitable computers. Electronic devices can also represent various forms of mobile devices, such as personal digital processing, cellular phones, smart phones, wearable devices, and other similar computing devices. The components shown herein, their connections and relationships, and their functions are merely as examples, which are not intended to limit the implementation described and/or required herein.

As shown in FIG. 8, the device 800 includes a computing unit 801 which may execute various appropriate actions and processes according to computer programs stored in a read-only memory (ROM) 802 or computer programs loaded from a storage unit 808 into a random access memory (RAM) 803. Various programs and data required for operations of the device 800 can also be stored in the RAM 803. The calculation unit 801, the ROM 802, and the RAM 803 are connected to each other through a bus 804. An input/output (I/O) interface 805 is also connected to the bus 804.

Multiple components in the device 800 are connected to the I/O interface 805, which include an input unit 806 (such as a keyboard, a mouse, etc.), an output unit 807 (such as various types of displays, speakers, etc.), a storage unit 808 (such as a magnetic disk, an optical disk, etc.), and a communication unit 809 (such as a network card, a modem, a wireless communication transceiver, etc.). The communication unit 809 allows the device 800 to exchange information/data with other devices through a computer network such as the Internet and/or various telecommunication networks.

The computing unit 801 may be various general-purpose and/or special-purpose processing components with processing and computing capabilities. Some examples of computing unit 801 include, but are not limited to, central processing units (CPU), graphics processing units (GPU), various dedicated artificial intelligence (AI) computing chips, various computing units that run machine learning model algorithms, digital signal processors (DSP), and any appropriate processors, controllers, microcontrollers, etc. The calculation unit 801 executes the various methods and processes described above, for example, a method for controlling vehicle driving. For example, in some embodiments, the method for controlling vehicle driving may be implemented as computer software programs, which are tangibly contained in a machine-readable medium, such as the storage unit 808. In some embodiments, part or all of the computer programs may be loaded and/or installed on the device 800 via the ROM 802 and/or the communication unit 809. When the computer programs are loaded into the RAM 803 and executed by the calculation unit 801, one or more steps of the method for controlling vehicle driving described above can be executed. Alternatively, in other embodiments, the computing unit 801 may be configured to execute the method for controlling vehicle driving in any other suitable manner (for example, by means of firmware).

Various implementations of the systems and technologies described herein can be implemented in digital electronic circuit systems, integrated circuit systems, field programmable gate arrays (FPGA), application specific integrated circuits (ASIC), application-specific standard products (ASSP), systems on chip (SOC), complex programmable logic device (CPLD), computer hardware, firmware, software, and/or their combination thereof. These various embodiments may be executed in one or more computer programs, in which the one or more computer programs may be executed and/or interpreted on a programmable system including at least one programmable processor, in which the programmable processor may be a dedicated or general purpose programmable processor that can receive data and instructions from the storage system, at least one input device, and at least one output device, and transmit the data and instructions to the storage system, at least one input device, and at least one output device.

The program codes used to implement the method of the present disclosure can be written in any combination of one or more programming languages. These program codes can be provided to processors or controllers of general-purpose computers, special-purpose computers, or other programmable data processing apparatus, so that when the program codes are executed by a processor or a controller, functions/operations specified in flowcharts and/or block diagrams are implemented. The program codes can be entirely executed on a machine, partly executed on a machine, partly executed on a machine as an independent software package and partly executed on a remote machine, or entirely executed on a remote machine or a server.

In the context of the present disclosure, a machine-readable medium may be a tangible medium, which may include or store programs for use by instruction execution systems, apparatuses, or devices, or for use by the combination of instruction execution systems, apparatuses, or devices. The machine-readable medium may be a machine-readable signal medium or a machine-readable storage medium. The machine-readable medium may include, but is not limited to, an electronic, a magnetic, an optical, an electromagnetic, an infrared semiconductor system, apparatus, or device, or any suitable combination thereof. More specific examples of machine-readable storage medium may include an electrical connection based on one or more wires, portable computer disks, hard disks, RAMs, ROMs, erasable programmable read-only memories (EPROM or flash memories), optical fibers, portable compact disk read-only memories (CD-ROM), optical storage devices, magnetic storage devices, or any suitable combination thereof.

In order to provide interactions with the user, the systems and technologies described herein can be executed on a computer in which the computer includes a display device for displaying information to the user (for example, a CRT (cathode ray tube) or an LCD (liquid crystal display) monitor)); and a keyboard and a pointing device (for example, a mouse or a trackball) through which the user can provide the input to the computer. Other types of apparatus can also be used to provide interactions with the user; for example, the feedback provided to the user can be any form of sensory feedback (for example, a visual feedback, an auditory feedback, or a tactile feedback); and can be in any form (for example, an acoustic input, a voice input, or a tactile input) to receive the input from the user.

The systems and technologies described herein can be executed in a computing system that includes back-end components (for example, as a data server), or a computing system that includes middleware components (for example, an application server), or a computing system that includes front-end components (for example, a user computer with a graphical user interface or web browser through which the user can interact with the implementation of the systems and technologies described herein), or a computing system that includes any combination of the back-end components, middleware components, or front-end components. The components of the system can be connected to each other through any form or medium of digital data communication (for example, a communication network). Examples of communication networks include: local area networks (LAN), wide area networks (WAN), the Internet, and blockchain networks.

The computer system may include a client and a server. The client and server are generally far away from each other and usually interact through a communication network. The relationship between the client and the server is generated by computer programs that run on the corresponding computer and have a client-server relationship with each other. The server may be a cloud server, also known as a cloud computing server or a cloud host, which is a host product in the cloud computing service system to solve defects such as difficult management and weak business scalability existing in services of conventional physical hosts and virtual private servers (VPS). The server can also be a server of a distributed system, or a server combined with a blockchain.

It should be understood that the various forms of processes illustrated above can be used to reorder, add or delete steps. For example, the steps described in the present disclosure can be executed in parallel, sequentially, or in a different order, as long as the desired result of the technical solution disclosed in the present disclosure can be achieved, which is not limited herein.

The above specific implementations do not constitute a limitation to the protection scope of the present disclosure. Those skilled in the art should understand that various modifications, combinations, sub-combinations and substitutions can be made according to design requirements and other factors. Any modification, equivalent replacement and improvement made within the spirit and principle of the disclosure shall be included in the protection scope of this disclosure.

## Claims

1. A method for controlling a vehicle, comprising:
obtaining (S101) a plurality of images when the vehicle is driving, and determining lane line information included in the plurality of images by recognizing lane lines in the plurality of images;
in response to a type of lane line in an image being a specified type, determining (S102) a region to be detected of the image based on a position of the specified type of lane line;
determining (S103) traffic light information included in the image by detecting traffic lights in the region to be detected; and
determining (S104) a current driving mode of the vehicle based on the traffic light information included in the image and a current driving state of the vehicle and driving the vehicle in the current driving mode.

2. The method of claim 1, determining the region to be detected of the image comprises:
determining (S201) a number of pixels of an interval between a region to be detected and a position of the lane line in any image based on an imaging distance of any image; and
determining (S202) the region to be detected of the image based on the number of pixels of the interval and the position of the specified type of lane line in the image.

3. The method of claim 1, determining traffic light information included in the image by detecting traffic lights in the region to be detected comprises:
determining (S301) initial traffic light information included in the image by detecting the region to be detected in advance; and
determining (S302) the traffic light information included in the image by verifying the initial traffic light information based on the lane line information included in the image.

4. The method of claim 3, wherein the traffic light information comprises a number of traffic lights and a traffic light type, and determining the traffic light information included in the image by verifying the initial traffic light information comprises:
determining (S401) a number of target traffic lights and a target traffic light type in the image based on the lane line information included in the image;
in response to the number of traffic lights in the initial traffic light information not matching the number of target traffic lights, and in response to the traffic light type in the initial traffic light information not matching the target traffic light type, expanding (S402) the region to be detected; and
determining (S403) the traffic light information included in the image by detecting traffic lights in the expanded region to be detected.

5. The method of claim 1, determining traffic light information included in the image by detecting traffic lights in the region to be detected comprises:
determining (S501) a number of initial traffic lights and an initial traffic light type in the image by detecting the region to be detected in advance;
determining (S502) a number of target traffic lights and a target traffic light type in the image based on position information of the vehicle;
in response to the number of initial traffic lights not matching the number of target traffic lights and in response to the traffic light type in the initial traffic light information not matching the target traffic light type, expanding (S503) the region to be detected; and
determining (S504) the traffic light information included in any image by detecting traffic lights in the expanded region to be detected.

6. The method of claim 1, further comprising:
in response to an image including a preceding vehicle, determining a current driving state of the preceding vehicle based on other images adjacent to the image including the preceding vehicle; and
in response to the preceding vehicle being in a stopped state, calibrating the region to be detected based on a position of the preceding vehicle.

7. The method of any one of claims 1 to 6, wherein the traffic light information comprises a traffic light type and a traffic light color, and determining the current driving mode of the vehicle comprises:
determining a target traffic light and a target traffic light color corresponding to the vehicle based on a current driving direction of the vehicle, the traffic light type and the traffic light color; and
determining the current driving mode of the vehicle based on the target traffic light color, an imaging distance of the image, and a current driving speed of the vehicle.

8. An apparatus for controlling a vehicle, comprising:
a first determining module (710), configured to obtain a plurality of images when the vehicle is driving, and determine lane line information included in the plurality of images by recognizing lane lines in the plurality of images;
a second determining module (720), configured to in response to a type of lane line in an image being a specified type, determine a region to be detected of the image based on a position of the specified type of lane line;
a third determining module (730), configured to determine traffic light information included in the image by detecting traffic lights in the region to be detected; and
a fourth determining module (740), configured to determine a current driving mode of the vehicle based on the traffic light information included in the image and a current driving state of the vehicle and drive the vehicle in the current driving mode.

9. The apparatus of claim 8, wherein the second determining module comprises:
a first determining unit, configured to determine a number of pixels of an interval between a region to be detected and a position of the lane line in any image based on an imaging distance of any image; and
a second determining unit, configured to determine the region to be detected of the image based on the number of pixels of the interval and the position of the specified type of lane line in the image.

10. The apparatus of claim 8, wherein the third determining module comprises:
a third determining unit, configured to determine initial traffic light information included in the image by detecting the region to be detected in advance; and
a fourth determining unit, configured to determine the traffic light information included in the image by verifying the initial traffic light information based on the lane line information included in the image;
wherein the traffic light information comprises a number of traffic lights and a traffic light type, and determining the traffic light information included in the image by verifying the initial traffic light information comprises:
a first determining subunit, configured to determine a number of target traffic lights and a target traffic light type in the image based on the lane line information included in the image;
a first generating subunit, configured to in response to the number of traffic lights in the initial traffic light information not matching the number of target traffic lights, and in response to the traffic light type in the initial traffic light information not matching the target traffic light type, expand the region to be detected; and
a second determining subunit, configured to determine the traffic light information included in the image by detecting traffic lights in the expanded region to be detected.

11. The apparatus of claim 8, wherein the third determining module comprises:
a fifth determining unit, configured to determine a number of initial traffic lights and an initial traffic light type in the image by detecting the region to be detected in advance;
a sixth determining unit, configured to determine a number of target traffic lights and a target traffic light type in the image based on position information of the vehicle;
a first generating unit, configured to in response to the number of initial traffic lights not matching the number of target traffic lights and in response to the traffic light type in the initial traffic light information not matching the target traffic light type, expand the region to be detected; and
a seventh determining unit, configured to determine the traffic light information included in any image by detecting traffic lights in the expanded region to be detected.

12. The apparatus of claim 8, further comprising:
a fifth determining module, configured to in response to an image including a preceding vehicle, determine a current driving state of the preceding vehicle based on other images adjacent to the image including the preceding vehicle; and
a first calibrating module, configured to in response to the preceding vehicle being in a stopped state, calibrate the region to be detected based on a position of the preceding vehicle.

13. The apparatus of any one of claims 8 to 12, wherein the traffic light information comprises a traffic light type and a traffic light color, and determining the current driving mode of the vehicle comprises:
an eighth determining unit, configured to determine a target traffic light and a target traffic light color corresponding to the vehicle based on a current driving direction of the vehicle, the traffic light type and the traffic light color; and
an ninth determining unit, configured to determine the current driving mode of the vehicle based on the target traffic light color, an imaging distance of the image, and a current driving speed of the vehicle.

14. An electronic device, comprising:
at least a processor; and
a memory communicatively coupled to at least one processor;
wherein the memory is configured to store instructions executable by at least one processor, wherein when the instructions are executed by at least one processor, at least one processor is configured to implement the method according to any one of claims 1 to 7.

15. A non-transitory computer-readable storage medium having computer instructions stored thereon, wherein the computer instructions are configured to cause a computer to execute the method according to any one of claims 1 to 7.
